# EUROPÄISCHE PATENTSCHRIFT

(11) **EP 2 041 375 B1**
(45) Veröffentlichungstag und Bekanntmachung des Hinweises auf die Patenterteilung: **07.12.2016**
(21) Anmeldenummer: 07786058.3
(22) Anmeldetag: 13.07.2007
(51) Int. Cl.: B05B 1/30, E03C 1/08, F16K 35/04, F16K 3/08

(54) **AUSLAUFMUNDSTÜCK**
OUTLET NOZZLE
EMBOUT DE SORTIE

(30) Priorität: 19.07.2006 DE 202006011149 U
(43) Veröffentlichungstag der Anmeldung: 01.04.2009
(73) Patentinhaber: Neoperl GmbH, 79379 Müllheim (DE)
(72) Erfinder: WEIS, Christoph, 79379 Müllheim (DE); DENZLER, Oliver, CH-4103 Bottmingen (CH); STEIN, Alexander, 79241 Ihringen (DE); FANGMEIER, Martin, 79424 Auggen (DE)
(74) Vertreter: Kunst, Manuel Nikolaus Johannes
(86) Internationale Anmeldenummer: PCT/EP2007/006232
(87) Internationale Veröffentlichungsnummer: WO 2008/009390

(56) Entgegenhaltungen:
- WO-A1-2004/085753
- GB-A- 2 272 746
- US-A1- 2006 016 001

## Beschreibung

Die Erfindung betrifft ein Auslaufmundstück, das an einer Auslaufarmatur gemäss dem Oberbegriff des Anspruchs 1.

Man kennt bereits Auslaufmundstücke, die am Auslaufende einer sanitären Auslaufarmatur befestigbar sind. In diese Auslaufmundstücke ist ein Strahlregler einsetzbar, der die Bildung eines homogenen, perlend-weichen und vorzugsweise nichtspritzenden Wasserstrahls begünstigen soll. Dabei ist meist in dem dem Auslaufmundstück abgewandten Endbereich der Auslaufarmatur eine Ventileinheit vorgesehen, die zwischen einer Offenstellung und einer Schließstellung bewegbar ist.

Die Herstellung solcher Anschlussarmaturen, die platzsparende und formschöne Unterbringung der Ventileinheit und die Befestigung eines zusätzlichen Strahlreglers mit Hilfe eines Auslaufmundstücks erfordert einen erheblichen Platz- und Herstellungsaufwand, der jedoch nicht überall gerechtfertigt und möglich ist.

Aus der US 2006/016001 A1 ist ein Auslaufmundstück gemäss dem Oberbegriff des Anspruchs 1 bekannt, wobei dieses Auslaufmundstück am Auslaufende einer sanitären Wasserleitung befestigbar ist und eine Ventileinheit aufweist, die zwischen einer, die Wasserleitung verschließenden Sperrposition und einer die Wasserleitung freigebenden Offenposition bewegbar ist. Das aus US 2006/016001 A1 vorbekannte Auslaufmundstück ist zweiteilig ausgebildet und weist ein am Auslaufende der Wasserleitung befestigbares Anschluss-Teilstück sowie ein benachbartes Aufnahme-Teilstück auf. Dabei ist das Anschluss-Teilstück in eine stirnseitig offene Aufnahmehöhlung des Aufnahme-Teilstücks derart eingesetzt, dass ein, ein Außengewinde aufweisender Abschnitt des Anschluss-Teilstücks über eine Durchgriffsöffnung vorsteht, die an der zuströmseitigen Stirnseite des Aufnahme-Teilstücks vorgesehen ist. In die Aufnahmehöhlung des Aufnahme-Teilstücks ist auch die aus zwei zusammenwirkenden Ventilscheiben gebildete Ventileinheit sowie eine als Strahlformer bestimmte Strahlregler-Einheit eingesetzt. Um das Aufnahme-Teilstück nicht überlang gestalten zu müssen, ist die Strahlregler-Einheit lediglich durch einen plattenförmigen Strömungsgleichrichter gebildet, der von einer zentralen Öffnung aus strahlenförmig auseinanderlaufende Stege hat, welche Durchflussöffnungen zwischen sich begrenzen.Dieser plattenförmige Strömungsgleichrichter, der den ausströmenden Wasserstrahl lediglich homogen zu formen vermag, ist mittels eines, ein Strahlregler-Gehäuse bildenden Sicherungsringes: im Aufnahme-Teilstück gehalten, welcher Sicherungsring ein Außengewinde trägt, mit dem der Sicherungsring in ein Innengewinde im Aufnahme-Teilstück einschraubbar ist.

Aus der WO 2004/085753 A1 ist bereits ein Auslaufmundstück vorbekannt, in das eine Strahlregler-Einheit eingesetzt ist, um diese am Wasserauslauf einer sanitären Auslaufarmatur montieren zu können. Diese Strahlregler-Einheit weist ein Strahlregler-Gehäuse auf, das zumindest im Bereich seines Flüssigkeitsauslasses aus einer unverformten Funktionslage in eine formveränderte Reinigungslage verformbar ist. Durch die Verformung des Strahlregler-Gehäuses können an dem Gehäuse eventuell anhaftende Ablagerungen gelöst werden, die andernfalls die Funktion der vorbekannten Strahlregler-Einheit zunehmend beeinträchtigen. Während die abströmseitige Stirnseite des Strahlregler-Gehäuses als ein, durch eine Vielzahl von Durchflusslöchern gebildeter Strömungsgleichrichter ausgebildet ist, ist in das Strahlregler-Gehäuse ein Strahlzerleger sowie ein kegelförmiges Vorsatzsieb eingesetzt. Der Strahlzerleger zerlegt das zuströmende Wasser in eine Vielzahl von Einzelstrahlen, die im Gehäuseinneren des Strahlregler-Gehäuses mit der Umgebungsluft zu einem homogenen, nicht-spritzenden und perlend-weichen Wasserstrahl geformt werden können. Die aus dem Vorsatzsieb, dem Strahlzerleger sowie dem abströmseitigen Strömungsgleichrichter gebildeten Strahlregler-Einheit benötigt jedoch eine entsprechende Einbaulänge, die nicht immer zur Verfügung steht.

Es besteht daher die Aufgabe, ein Auslaufmundstück der eingangs erwähnten Art zu schaffen, das einen homogenen, aber auch perlend-weichen und nicht-spritzenden Wasserstrahl zu formen vermag, wobei der im Bereich des Wasserauslaufs erforderliche Herstellungs- und insbesondere auch der Platzaufwand reduziert werden soll, ohne dass damit wesentliche Funktionseinbußen verbunden wären.

Die erfindungsgemäße Lösung dieser Aufgabe besteht in den Merkmalen des Anspruchs 1.

Das erfindungsgemäße Auslaufmundstück ist am Auslaufende einer sanitären Wasserleitung befestigbar. Das erfindungsgemäß Auslaufmundstück weist eine Ventileinheit auf, die zwischen einer die Wasserleitung verschließenden Sperrposition und einer die Wasserleitung freigebenden Offenposition bewegbar ist. Diese Ventileinheit macht eine sanitäre Auslaufarmatur entbehrlich, die üblicherweise an ihrem dem Auslaufmundstück abgewandten Armaturen-Endbereich eine vergleichsweise voluminöse Ventileinheit aufweist. Das erfindungsgemäße Auslaufmundstück begünstigt daher die platz- und kostensparende Ausgestaltung im Bereich des Wasserauslaufs. Bei dem erfindungsgemäßen Auslaufmundstück ist der Strahlformer als Strahlregler-Einheit ausgebildet, die ein Strahlreglergehäuse aufweist, in dessen Gehäuseinneren ein Strahlzerleger und ein Strömungsgleichrichter vorgesehen ist. Mit Hilfe der erfindungsgemäß vorgesehenen Strahlregler-Einheit vermag das Auslaufmundstück einen homogenen und gleichzeitig nicht-spritzenden sowie perlend-weichen Wasserstrahl zu formen. Es ist ein besonderer Vorteil des erfindungsgemäßen Auslaufmundstücks, dass der Wasserauslauf der Auslaufarmatur bei Bedarf geöffnet oder geschlossen werden kann, ohne dass die Gefahr eines Losschraubens des in einem Teilstück des Auslaufmundstücks befindlichen Strahlformers befürchtet werden muss. Dabei kann das Auslaufmundstück betätigt werden, ohne dass zusätzlich eine vorstehende Armaturenhandhabe erforderlich wäre. Im Anschluss-Teilstück des erfindungsgemäßen Auslaufmundstücks ist ein mit einer Ventilscheibe der Ventileinheit drehfest verbindbarer Mitnehmer vorgesehen. Dieser Mitnehmer ist mit einem Mitnehmer-Gegenstück im Aufnahme-Teilstück verbunden.

Eine Drehbewegung am Aufnahme-Teilstück wird mit Hilfe des Mitnehmer-Gegenstücks sowie des Mitnehmers auf die Ventilheinheit übertragen, die mit ihren Ventilscheiben im Anschluss-Teilstück vorgesehen ist.

Dabei werden das Anschluss-Teilstück und das Aufnahme-Teilstück mithilfe des Mitnehmers sowie des Mitnehmer-Gegenstücks relativ zueinander verdrehbar aneinander gehalten. Da die erfindungsgemäß vorgesehene Strahlregler-Einheit in der stirnseitig offenen Aufnahmehöhlung des Aufnahme-Teilstücks lösbar eingesetzt ist, kann die Strahlregler-Einheit bei Bedarf ausgetauscht werden. Da am Strahlregler-Gehäuse außenumfangseitig ein Außengewinde vorgesehen ist, welches mit einem Innengewinde im Aufnahme-Teilstück korrespondiert, lässt sich die erfindungsgemäß vorgesehene Strahlregler-Einheit rasch und auf bequeme Weise im Auslaufmundstück unterbringen.

Damit das erfindungsgemäße Auslaufmundstück die üblichen Funktionen einer regelmäßig wesentlich größeren Wasserauslaufarmatur übernehmen kann, ist es zweckmäßig, wenn die Ventileinheit als Regelventil ausgestaltet ist, das ein Einregeln der durch das Regelventil pro Zeiteinheit durchströmenden Flüssigkeitsmenge erlaubt.

Dabei ist es besonders vorteilhaft, wenn die Ventileinheit zumindest zwei aneinander anliegende Ventilscheiben mit jeweils mindestens einer Scheibenöffnung hat und wenn die Ventilscheiben relativ zueinander zwischen einer Sperrposition, in welcher Sperrposition die Scheibenkörper der Ventilscheiben die wenigstens eine Scheibenöffnung der jeweils benachbarten Ventilscheibe dichtend überdecken, und wenigstens einer Offenposition verdrehbar sind, in welcher Offenposition die Scheibenöffnungen der Ventilscheiben zumindest bereichsweise miteinander fluchten. Eine solche, aus zwei einander anliegenden Ventilscheiben bestehende Ventileinheit kann vergleichsweise platzsparend ausgestaltet werden.

Die Ventilscheiben können dicht und gleichzeitig drehbar aneinander anliegen, wenn zumindest eine Ventilscheibe als Keramik- oder Kunststoffscheibe ausgestaltet ist.

Zum Betätigen der im Inneren des erfindungsgemäßen Auslaufmundstücks befindlichen Ventileinheit ist es zweckmäßig, wenn das Anschluss-Teilstück und das Aufnahme-Teilstück zum Verdrehen der Ventilscheiben relativ zueinander verdrehbar sind. Da das Anschluss-Teilstück üblicherweise fest am Auslaufende der sanitären Wasserleitung verschraubt ist, ist es zweckmäßig, wenn das Aufnahme-Teilstück verdrehbar am Anschluss-Teilstück gehalten ist und wenn das Aufnahme-Teilstück mit zumindest einer Ventilscheibe in Dreh-Antriebsverbindung steht.

Eine Weiterbildung gemäß der Erfindung von eigener schutzwürdiger Bedeutung sieht vor, dass die Ventileinheit gegen eine Rückstellkraft von der Sperrposition in eine Offenposition bewegbar ist, und dass zumindest ein Reibelement für eine gedämpfte bzw. verzögerte Rückstellbewegung oder zur zeitverzögerten Freigabe der durch die Rückstellkraft bewirkten Rückstellbewegung vorgesehen ist. Bei dieser weiterbildenden Ausführungsform kann sich die Ventileinheit praktisch automatisch von ihrer Offenstellung zurück in die Sperrposition bewegen, wobei zumindest ein Reibelement für die zeitverzögerte Freigabe der durch die Rückstellkraft bewirkten Rückstellbewegung sorgt. Bei dieser weiterbildenden Ausführungsform wird dem Anwender, der die Ventileinheit durch eine Drehbewegung in ihre Offenposition gebracht hat, über einen begrenzten Zeitraum eine definierte Wassermenge zur Verfügung gestellt, bevor die im Auslaufmundstück vorgesehene Ventileinheit praktisch automatisch und ohne weiteres Zutun des Anwenders schließt. Ein solches, mit einer Selbstschlusseinrichtung ausgestattetes Auslaufmundstück ist insbesondere in öffentlich zugänglichen Bereichen vorteilhaft einsetzbar.

Dabei kann als Rückstellkraft zumindest ein federelastisches und/oder wenigstens ein gummielastisches Rückstellelement vorgesehen sein. Um die Rückstellbewegung des Auslaufmundstücks wirksam werden zu lassen, ist es vorteilhaft, wenn das zumindest eine Rückstellelement zwischen dem Anschluß-Teilstück und dem Aufnahme-Teilstück wirksam ist.

Dabei kann zumindest ein Reibelement zwischen den Ventilscheiben und/oder wenigstens ein Reibelement zwischen dem Innenumfang des Anschluß-Teilstückes und der mit dem Aufnahme-Teilstück in Drehantriebsverbindung stehenden Ventilscheibe wirksam sein.

Eine Ausführungsform gemäß der Erfindung sieht vor, dass ein die Ventilscheibe ringförmig umschließendes Reibelement vorgesehen ist, das an seinem Innenumfang zumindest eine Auflaufschräge hat, die mit einem als Gegenschräge ausgebildeten Umfangs-Teilbereich der Ventilscheibe derart zusammenwirkt, dass die Auflaufschräge während der durch die Rückstellkraft bewirkten Rückstellbewegung auf die Gegenschräge aufläuft. Durch das Auflaufen der am Reibelement vorgesehenen Auflaufschräge auf die an der Ventilscheibe angeordneten Gegenschräge ergibt sich eine durch definierte Reibung gedämpfte Rückstellbewegung, welche die Ventileinheit für einen definierten Zeitraum in ihrer Offenstellung hält.

Dabei ist es vorteilhaft, wenn das ringförmige Reibelement infolge des Auflaufens seiner zumindest einen Auflaufschräge vorzugsweise derart aufweitbar ist, dass das Reibelement zunehmend an den Innenumfang des Anschluß-Teilstückes gepresst wird.

Zweckmäßig kann es sein, wenn als Rückstellkraft zumindest eine Druck- oder Zugfeder und vorzugsweise eine Schenkelfeder vorgesehen ist.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: ein als Auslaufende einer Wasserleitung dienendes Wasserauslaufrohr, das an seinem abströmseitigen Rohrende ein Auslaufmundstück trägt,
- Fig. 2: das Auslaufmundstück aus Fig. 1 in einer auseinandergezogenen perspektivischen Darstellung seiner Einzelteile,
- Fig. 3: das in seiner Offenstellung dargestellte Auslaufmundstück aus den Fig. 1 und 2 in einem Längsschnitt,
- Fig. 4: das in seiner Offenstellung dargestellte Auslaufmundstück in einer zuströmseitigen Draufsicht,
- Fig. 5: das in einer Schließ- oder Sperrposition dargestellte Auslaufmundstück in einem Längsschnitt,
- Fig. 6: das in seiner Sperrposition gezeigte Auslaufmundstück in einer zuströmseitigen Draufsicht,
- Fig. 7: ein Auslaufmundstück mit einer Selbstschlusseinrichtung, welche den Wasserauslauf nur für einen begrenzten Zeitraum in seiner Offenstellung hält, bevor diese Selbstschlusseinrichtung den Wasserauslauf praktisch automatisch wieder verschließt,
- Fig. 8: die im Bereich einer Ventilscheibe angeordnete Selbstschlusseinrichtung des in Figur 7 gezeigten Auslaufmundstücks in einer perspektivischen Darstellung,
- Fig. 9: das Auslaufmundstück aus Figur 7 und 8 in einem Querschnitt im Bereich seiner Selbstschlusseinrichtung,
- Fig. 10: das Auslaufmundstück aus Figur 7 bis 9 in einem Längsschnitt, wobei sich eine im Auslaufmundstück vorgesehene Ventileinheit in ihrer Offenstellung befindet,
- Fig. 11: die Ventileinheit des in den Figuren 7 bis 10 gezeigten Auslaufmundstücks in einer Draufsicht,
- Fig. 12: das Auslaufmundstück aus den Figuren 7 bis 11 in einem Längsschnitt, wobei sich die Ventileinheit in ihrer Schließstellung befindet,
- Fig. 13: das Auslaufmundstück aus den Figuren 7 bis 12 in der Schließstellung seiner Ventileinheit,
- Fig. 14: ein in einer auseinandergezogenen Einzelteildarstellung gezeigtes Auslaufmundstück, das hier ebenfalls eine Selbstschlusseinrichtung hat,
- Fig. 15: ein im Bereich der Ventileinheit des Auslaufmundstücks aus Figur 14 angeordnetes Reibelement in einer perspektivischen Detailansicht,
- Fig. 16: das Auslaufmundstück aus Figur 14 in einem Längsschnitt, wobei sich eine im Auslaufmundstück vorgesehene Ventileinheit in ihrer Offenstellung befindet,
- Fig. 17: die in einer Draufsicht dargestellte Ventileinheit des in den Figuren 14 und 16 gezeigten Auslaufmundstücks in seiner Offenstellung,
- Fig. 18: das ebenfalls längsgeschnittene Auslaufmundstück aus Figur 14 bis 17 in der Schließstellung seiner Ventileinheit, und
- Fig. 19: das in einer Draufsicht gezeigte Auslaufmundstück aus Figur 14 bis 18 in der Schließstellung seiner Ventileinheit.

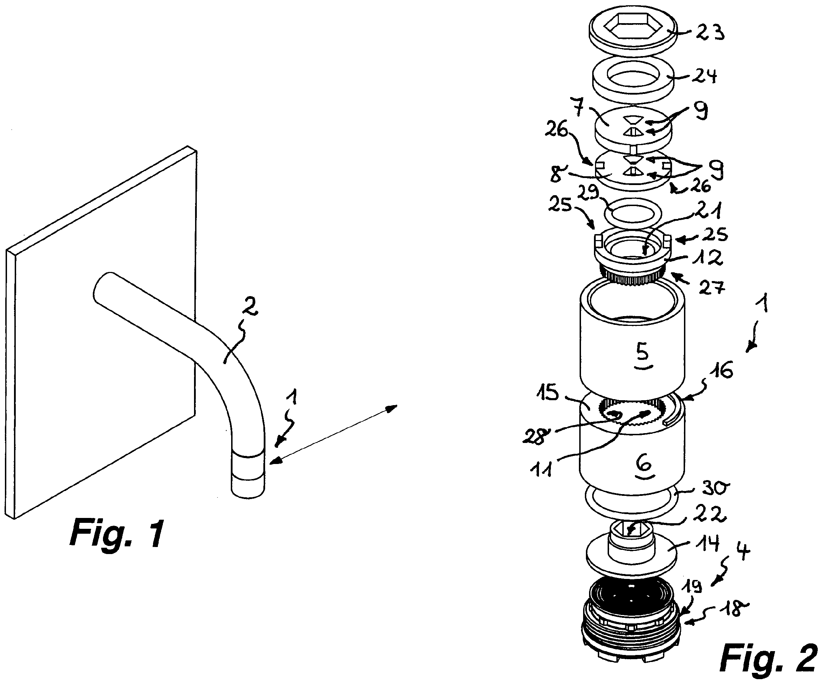

In den Fig. 1 bis 6 ist ein Auslaufmundstück 1 dargestellt, das an dem - hier beispielsweise als Wasserauslaufrohr 2 ausgestalteten - Auslaufende einer sanitären Wasserleitung befestigbar ist. Das Auslaufmundstück 1 weist eine Ventileinheit 3 auf, die ein in Zuströmrichtung vorgeschaltetes Sperr- und Regelventil entbehrlich macht. Diese Ventileinheit 3 ist zwischen einer, die Wasserleitung verschließenden Sperrposition und einer, die Wasserleitung freigebenden Offenposition bewegbar. Im Auslaufmundstück 1 ist zusätzlich eine Strahlregler-Einheit 4 vorgesehen, die einen Strahlzerleger, eine Homogenisiereinrichtung und/oder einen Strömungsgleichrichter aufweist und die Bildung eines homogenen, perlend-weichen und/oder nicht-spritzenden Wasserstrahls begünstigen soll.

Aus den Fig. 1 bis 6 wird deutlich, dass das Auslaufmundstück 1 zumindest zweiteilig ausgestaltet ist und zwei hülsenförmige Teilstücke 5, 6 hat. Während die Ventileinheit 3 in einem am Auslaufende der Wasserleitung befestigbaren Anschluss-Teilstück 5 vorgesehen ist, ist die Strahlregler-Einheit 4 der Ventileinheit 3 in Strömungsrichtung nachgeschaltet und im Aufnahme-Teilstück 6 angeordnet.

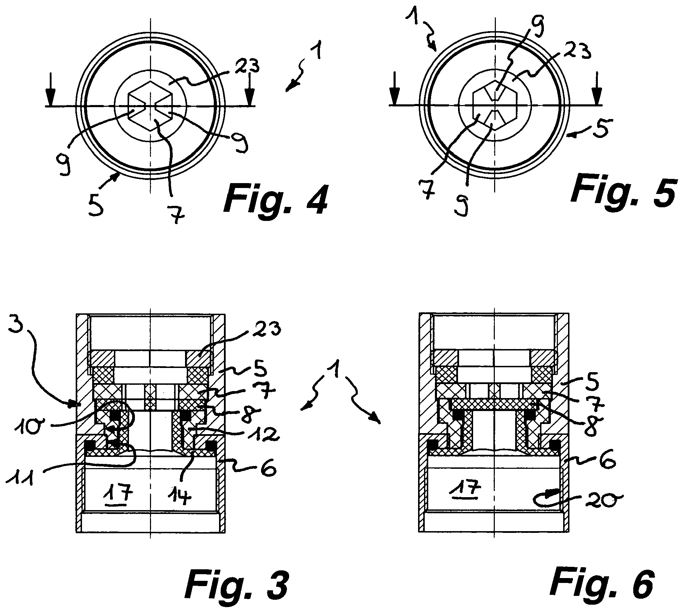

Die im Anschluss-Teilstück 5 vorgesehene Ventileinheit 3 ist als Regelventil ausgestaltet, das ein Einregeln der durch das Regelventil pro Zeiteinheit durchströmenden Flüssigkeitsmenge erlaubt. Die Ventileinheit 3 hat zwei aneinander anliegende Ventilschreiben 7, 8, die jeweils zwei, auf gegenüberliegenden Seiten des Scheibenkörpers angeordnete, kreissegmentförmige Scheibenöffnungen 9 haben. Diese Ventilscheiben 7, 8 sind zwischen einer Sperrposition und einer Offenposition verdrehbar; während in der in Fig. 5 und 6 gezeigten Sperrposition die Scheibenkörper der Ventilscheiben 7, 8 die Scheibenöffnungen 9 der jeweils benachbarten Ventilscheibe 7, 8 dichtend bedecken, können diese Scheibenöffnungen 9 in einer in Fig. 3 und 4 beispielhaft gezeigten Offenstellung zumindest bereichsweise miteinander fluchten.

Zum Verdrehen der Ventilscheiben 7, 8 sind das Anschluss-Teilstück 5 und das Aufnahme-Teilstück 6 relativ zueinander verdrehbar. Dabei steht das Aufnahme-Teilstück 6, das an dem am Auslaufende der Wasserleitung fixierten Anschluss-Teilstück 5 drehbar gehalten ist, mit zumindest einer Ventilscheibe 8 in Drehantriebsverbindung.

Die hülsenförmigen Teilstücke 5, 6 sind an ihren einander zugewandten Stirnenden topfförmig ausgestaltet und mit jeweils einer zentralen Topfboden-Öffnung 10, 11 ausgestattet. Im Anschluss-Teilstück 5 ist ein Mitnehmer 12 vorgesehen, der die Topfboden-Öffnung 10 des Anschluss-Teilstücks 5 durchsetzt, den die Topfboden-Öffnung 10 begrenzenden Randbereich hintergreift und in Richtung zum Aufnahme-Teilstück 6 übersteht. Das in Richtung zum Aufnahme-Teilstück 6 vorstehende Mitnehmer-Ende greift in die Topfboden-Öffnung 11 des Aufnahme-Teilstücks 6 ein und ist mit einem im Längsschnitt T-förmigen Mitnehmer-Gegenstück 14 verbindbar, das seinerseits den die Topfboden-Öffnung 11 des Aufnahme-Teilstücks 6 begrenzenden Randbereich 15 hintergreift. Der Mitnehmer 12 kann auch einen Gewindeschaft aufweisen, auf den eine Mutter als Mitnehmer-Gegenstück zum axialen Verbinden der Teilstücke 5, 6 aufschraubbar ist.

Auf diese Weise werden die Teilstück 5, 6 mit Hilfe des Mitnehmers 12 und seines Mitnehmer-Gegenstücks 14 drehbar aneinander gehalten. Dabei ist zwischen dem Anschluss-Teilstück 5 und dem Aufnahme-Teilstück 6 eine Drehführung vorgesehen, die hier durch einen außenseitig am Topfboden des einen Teilstücks 6 vorstehenden Führungszapfen 16 gebildet wird, welcher in eine am anderen Topfboden außenseitig vorgesehene und kreisförmig oder kreisabschnittförmige Führungsnut eingreift.

Das Aufnahme-Teilstück 6 weist eine stirnseitig offene Aufnahmehöhlung 17 auf, in welche die Strahlregler-Einheit 4 vorzugsweise lösbar einsetzbar ist. Die Strahlregler-Einheit 4 hat dazu ein Strahlregler-Gehäuse 18, in dessen Gehäuseinneren ein beispielsweise als Lochplatte ausgebildeter Strahlzerleger, eine beispielsweise durch zumindest eine Gitter- oder Netzstruktur ausgestaltete Homogenisiereinrichtung und/oder ein Strömungsgleichrichter vorgesehen ist, der etwa durch eine abströmseitige Lochplatte mit vorzugsweise wabenzellenartig angeordneten Durchflusslöchern ausgestaltet sein kann. Dabei ist es zweckmäßig, wenn das Strahlregler-Gehäuse außenumfangsseitig ein Außengewinde 19 hat, welches Außengewinde 19 mit einem Innengewinde 20 im Aufnahme-Teilstück 6 korrespondiert.

In der in Fig. 3 gezeigten Offenstellung vermag der Wasserstrahl durch die zumindest bereichsweise miteinander fluchtenden Scheibenöffnungen 9 der Ventilscheiben 7, 8 zu strömen, um anschließend durch zentrale Durchströmöffnungen 21, 22 im Mitnehmer 12 und Mitnehmer-Gegenstück 14 zur Strahlregler-Einheit 4 zu gelangen, wo der Wasserstrahl zu einem homogenen, perlend-weichen und/oder nicht-spritzenden Wasserstrahl aufbereitet wird, der bedarfsweise und je nach Ausgestaltung der Strahlregler-Einheit belüftet oder unbelüftet sein kann. Die zentralen Durchströmöffnungen 21, 22 weisen hier einen sechseckigen Öffnungsquerschnitt auf, so dass in diese Durchströmöffnungen 21, 22 während der Montage des erfindungsgemäßen Auslaufmundstückes entsprechende Innensechskantschlüssel angesetzt werden können.

Aus den Fig. 3 und 5 wird deutlich, dass die Ventilschreiben im Hülseninneren des Anschluss-Teilstücks 5 mittels eines Schraub-oder Sicherungsrings 23 gehalten sind, der hier mit einem Innengewinde am Innenumfang des Anschluss-Teilstücks 5 korrespondiert. Dabei kann der Sicherungsring 23 gegenüber der benachbarten Ventilscheibe 5 und/oder gegenüber dem Rohrende des Wasserauslaufrohres 2 durch einen Dichtring 24 abgedichtet sein. Der Mitnehmer 12 weist zumindest einen stirnseitig vorstehenden Mitnehmerzapfen 25 auf, der in eine Mitnehmeröffnung 26 an der benachbarten Ventilscheibe 8 drehschlüssig eingreift. Der Mitnehmer 12 hat hier zwei, auf gegenüberliegenden Seiten des Mitnehmers 12 angeordnete Mitnehmerzapfen 25, die jeweils in eine randseitig offene Mitnehmeröffnung 26 der Ventilscheibe 8 eingreifen. Die Ventilscheibe 7 ist ihrerseits im Anschluss-Teilstück 5 drehfest gehalten.

Die Ventilscheiben 7, 8 sind hier als Keramikscheiben ausgestaltet, die dicht und dennoch drehbar aneinander anliegen. Der Mitnehmer 12 weist an seinem, die Topfboden-Öffnungen durchsetzenden Mitnehmerende außenumfangsseitig eine Profilierung 27 auf, die formschlüssig oder drehfest in eine Gegenprofilierung 28 an dem die Topfboden-Öffnung begrenzenden Randbereich des Aufnahme-Teilstücks eingreift. Um Kriechströme zu vermeiden, sind der Mitnehmer und die benachbarte Ventilscheibe sowie das Mitnehmer-Gegenstück gegenüber der inneren Topfboden-Stirnfläche des Aufnahme-Teilstücks jeweils durch Dichtringe 29, 30 abgedichtet.

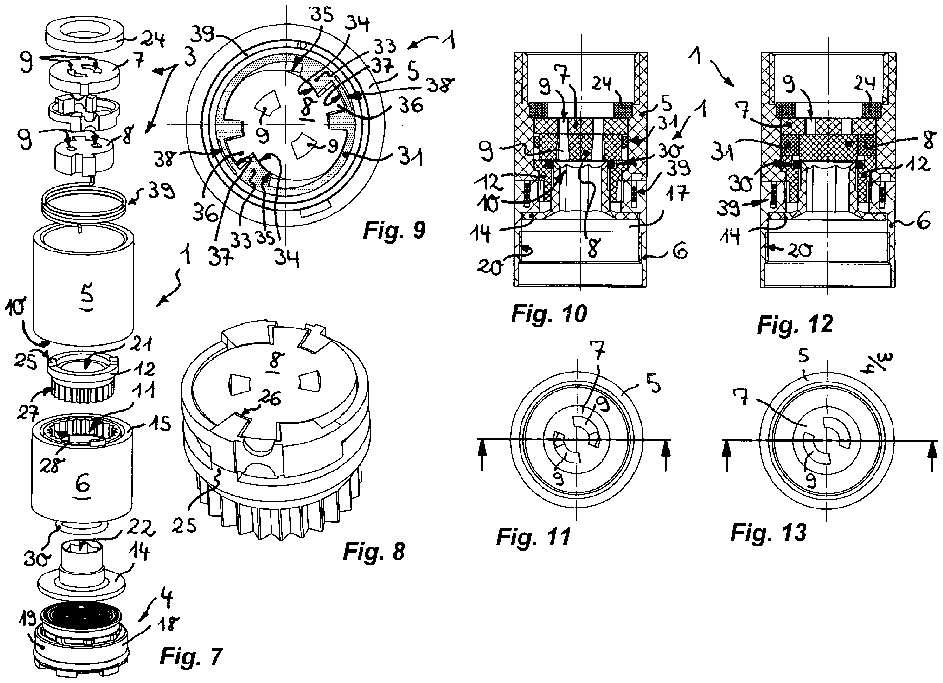

In den Fig. 7 bis 19 sind zwei unterschiedliche Ausführungen eines Auslaufmundstücks 1 dargestellt. Diese Auslaufmundstücke 1, die ebenfalls an dem als Wasserauslaufrohr ausgestalteten Auslaufende einer sanitären Wasserleitung befestigbar sind, weisen eine Ventileinheit 3 auf, die gegen eine Rückstellkraft von der Sperrposition in eine Offenposition bewegbar ist, wobei jeweils ein Reibelement 31, 32 zur zeitverzögerten Freigabe der durch die Rückstellkraft bewirkten Rückstellbewegung vorgesehen ist. Bei den in den Fig. 7 bis 19 gezeigten Auslaufmundstücken 1 wird die Ventileinheit 3 bei Bedarf in ihre Offenstellung gedreht, um sich anschließend durch eine infolge des Reibelements 31 bzw. 32 verzögerte Rückstellkraft automatisch in ihre Schließstellung zu bewegen. Die Auslaufmundstücke 1 gemäß den Figuren 7 bis 19 sind daher aufgrund ihrer selbsttätig schließenden Ventileinheit 3 zum Einsatz insbesondere in öffentlich zugänglichen Sanitärbereichen prädestiniert, wo jedem Anwender eine definierte Wassermenge bereitgestellt und ein übermäßiger Wasserverbrauch verhindert werden soll.

Die in den Fig. 7 bis 19 dargestellten Auslaufmundstücke 1 stimmen in ihrem Aufbau mit dem Auslaufmundstück 1 aus Fig. 1 bis 6 im wesentlichen überein. Auch die Auslaufmundstücke 1 gemäß den Fig. 7 bis 19 sind zweiteilig ausgestaltet und weisen zwei hülsenförmige Teilstücke 5, 6 auf. Während die Ventileinheit 3 in einem am Auslaufende der Wasserleitung befestigbaren Anschluß-Teilstück 5 vorgesehen ist, ist in dem Aufnahme-Teilstück 6 eine der Ventileinheit 3 nachgeschaltete Strahlregler-Einheit 4 vorgesehen, welche die Bildung eines homogenen, perlend-weichen und nicht-spritzenden Wasserstrahls begünstigen soll. Diese Strahlregler-Einheit 4 weist dazu einen Strahlzerleger, eine Homogenisiereinrichtung und/oder einen Strömungsgleichrichter auf.

Auch die im Anschluß-Teilstück 5 der Auslaufmundstücke 1 gemäß den Fig. 7 bis 19 vorgesehene Ventileinheit 3 weist zwei aneinander anliegende Ventilscheiben 7, 8 auf, die jeweils zwei, auf gegenüberliegenden Seiten des Scheibenkörpers angeordnete kreissegmentförmige Scheibenöffnungen 9 haben. Diese Ventilscheiben 7, 8 sind zwischen einer Sperrposition und einer Offenposition verdrehbar; während in der in Fig. 12 und 13 bzw. 18 und 19 gezeigten Sperrposition die Scheibenkörper der Ventilscheiben 7, 8 die Scheibenöffnungen 9 der jeweils benachbarten Ventilscheibe dichtend bedecken, können diese Scheibenöffnungen 9 in den in Fig. 10 und 11 bzw. 16 und 17 gezeigten Offenstellungen zumindest bereichsweise miteinander fluchten.

Zum Verdrehen der Ventilscheiben 7, 8 sind das Anschlussteilstück 5 und das Aufnahme-Teilstück 6 relativ zueinander verdrehbar. Dabei steht das Aufnahme-Teilstück 6, das an dem am Auslaufende der Wasserleitung fixierten Anschluß-Teilstück 5 drehbar gehalten ist, mit zumindest einer Ventilscheibe 8 in Drehantriebsverbindung. Dazu ist im Anschluß-Teilstück 5 ein Mitnehmer 12 vorgesehen, der die Topfboden-Öffnung 10 des topfförmigen Anschluß-Teilstückes 5 durchsetzt, den die Topfboden- Öffnung 10 begrenzenden Randbereich hintergreift und in Richtung zum Aufnahme-Teilstück 6 übersteht. Das in Richtung zum Aufnahme-Teilstück 6 vorstehende Mitnehmer-Ende greift in die Topfboden-Öffnung 11 des Aufnahme-Teilstücks 6 ein und ist mit einem im Längsschnitt T-förmigen Mitnehmer-Gegenstück 14 verbindbar, das seinerseits den die Topfboden-Öffnung 11 des Aufnahme-Teilstücks 6 begrenzenden Randbereich 15 hintergreift. Der Mitnehmer 12 weist zumindest einen stirnseitig vorstehenden Mitnehmerzapfen 25 auf, der in einer Mitnehmeröffnung 26 an der benachbarten Ventilscheibe 8 drehschlüssig eingreift. Auch die Ventilscheiben 7, 8 der in den Fig. 7 bis 19 gezeigten Auslaufmundstücke sind als Keramikscheiben ausgestaltet, die dicht und dennoch drehbar aneinander anliegen.

Das in den Fig. 7 bis 13 gezeigte Auslaufmundstück 1 weist ein Reibelement 31 auf, das zwischen dem Innenumfang des Anschluß-Teilstückes 5 und der mit dem Aufnahme-Teilstück 6 in Drehantriebsverbindung stehenden Ventilscheibe 8 wirksam ist. Das die Ventilscheibe 8 ringförmig umschließend Reibelement 31 hat dazu an zwei, auf gegenüberliegenden Seiten seines Innenumfangs vorstehenden Ausformungen 33 jeweils eine Auflaufschräge 34, die mit einem zugeordneten und als Gegenschräge 35 ausgebildeten Umfangs-Teilbereich der Ventilscheibe 8 derart zusammenwirken, dass die Auflaufschrägen 34 während der auf die Rückstellkraft bewirkten Rückstellbewegung auf die Gegenschrägen 35 auflaufen, wobei das ringförmige Reibelement 31 infolge des Auflaufens seiner Auflaufschrägen 34 auf die Gegenschrägen 35 derart aufweitbar ist, dass das Reibelement 31 zunehmend an den Innenumfang des Anschluß-Teilstücks 5 gepreßt wird. Durch die infolge der Rückstellkraft bewirkte Rückstellbewegung der Ventilscheiben 7, 8 werden auch die Auflaufschrägen 34 in ihre Ausgangsstellung bewegt. An der Ventilscheibe 8 stehen Mitnehmerzapfen 36 vor, die jeweils formschlüssig in einer Mitnehmer-Aufnahme 37 am Innenumfang des ringförmigen Reibelementes 31 eingreifen. Damit die Ventilscheibe 8 relativ zu den am Innenumfang des Anschluß-Teilstückes 5 reibschlüssig anliegenden Reibelement 31 verdreht werden kann, weist das Reibelement 31 im Bereich seiner Mitnehmer-Aufnahmen 37 jeweils eine Materialschwächung 38 auf, die ein Dehnen des während der Rückstellbewegung als vorgespannte Gummifeder wirkenden Rückstellelementes 31 erlaubt.

Durch eine entgegen dem Uhrzeigersinn orientierte Drehbewegung am Aufnahme-Teilstück 6, die über den Mitnehmer 12 und dessen Mitnehmer-Zapfen 25 auch auf die Ventilscheibe 8 übertragen wird, wird das Reibelement 31 im Bereich seiner Materialschwächungen 38 gedehnt und die am Reibelement 31 vorgesehenen Auflaufschrägen 34 können sich in ihre "An"-Verstellung verdrehen. Wird das Aufnahme-Teilstück 6 vom Anwender losgelassen, kann sich die Drehrichtung umdrehen, wobei die als Bremskeile wirkenden Auflaufschrägen 34 und Gegenschrägen 35 aktiviert werden und derart auf die feststehende Außenkontor drücken, dass sich eine durch eine definierte Reibung gedämpfte Rückstellbewegung ergibt.

Bei dem Auslaufmundstück 1 gemäß den Fig. 7 bis 13 wird die Rückstellkraft durch eine Schenkelfeder 39 erzeugt, die mit ihrem einen Federende am Anschluß-Teilstück 5 und mit ihrem anderen Federende am Aufnahme-Teilstück 6 gehalten ist.

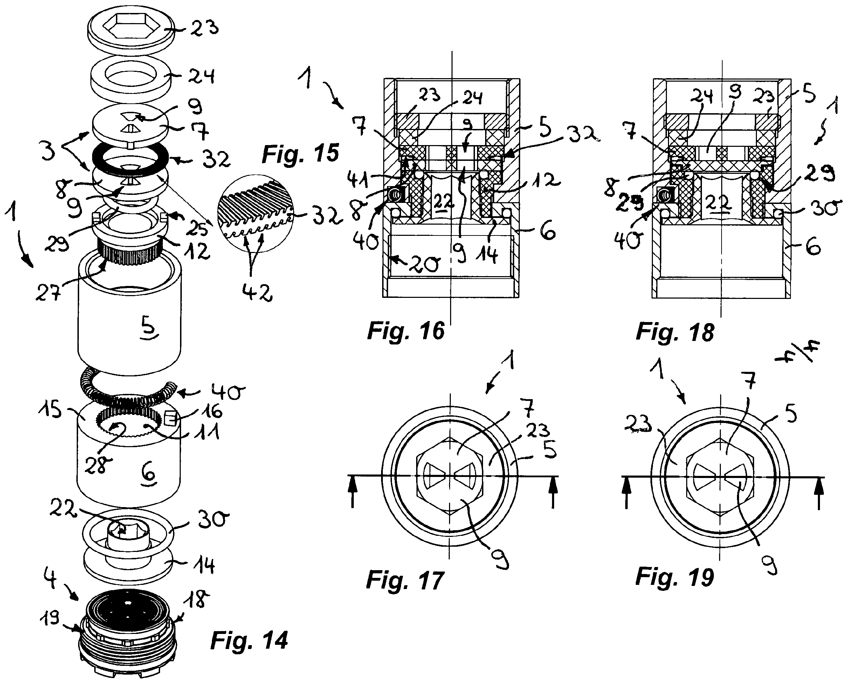

Das Auslaufmundstück 1 gemäß den Fig. 14 bis 19 weist ein Reibelement 32 auf, das zwischen den Ventilscheiben 7, 8 vorgesehen ist. Dabei wird die Rückstellkraft durch eine Druckfeder 40 erzeugt, die ebenfalls zwischen dem Anschluß-Teilstück 5 und dem Aufnahme-Teilstück 6 wirksam ist. Das ringförmig ausgebildete und in einer Ringnut 41 auf der Scheibenunterseite der Ventilscheibe 7 angeordnete Reibelement 32 weist auf seiner die Ventilscheibe 7 beaufschlagenden Oberseite und auf seiner an der Ventilscheibe 8 anliegenden Unterseite eine in Figur 15 näher dargestellte und aus radial orientierten Lamellen 42 gebildete Profilierung auf, die eine Bremswirkung erzeugt und während der durch die Rückstellfeder bewirkten Rückstellbewegung derart als Reibungsdämpfer dient, dass das Auslaufmundstück 1 gemäß den Fig. 14 bis 19 für eine definierte Zeitdauer in einer Offenstellung verbleibt, um die Ventileinheit 13 nach einer gedämpften Rückstellbewegung sich wieder automatisch in der Schließstellung zu verschließen.

## Patentansprüche

1. Auslaufmundstück (1), das an einer Auslaufarmatur oder dergleichen Auslaufende (2) einer sanitären Wasserleitung befestigbar ist und eine Ventileinheit (3) aufweist, die zwischen einer die Wasserleitung verschließenden Sperrposition und einer die Wasserleitung freigebenden Offenposition bewegbar ist, wobei das Auslaufmundstück (1) zumindest zweiteilig ausgestaltet ist und ein am Auslaufende der Wasserleitung befestigbares Anschluss-Teilstück (5) sowie ein benachbartes Aufnahme-Teilstück (6) hat, in welchem Aufnahme-Teilstück (6) ein Strahlformer vorgesehen ist, der als Strahlregler-Einheit (4) ausgebildet ist, die (4) ein Strahlregler-Gehäuse (18) aufweist, in dessen Gehäuseinneren ein Strahlzerleger und ein Strömungsgleichrichter vorgesehen ist, wobei das Aufnahme-Teilstück (6) eine stirnseitig offene Aufnahmehöhlung (17) hat, in welcher Aufnahmehöhlung (17) die Strahlregler-Einheit (4) lösbar einsetzbar ist, und wobei am Strahlregler-Gehäuse (18) außenumfangsseitig ein Außengewinde (19) vorgesehen ist, welches Außengewinde (19) mit einem Innengewinde (20) im Aufnahme-Teilstück (6) korrespondiert, wobei im Anschluss-Teilstück (5) ein mit einer Ventilscheibe (7, 8) der Ventileinheit (3) drehfest verbindbarer Mitnehmer (12) und im Aufnahme-Teilstück (6) ein Mitnehmer-Gegenstück (14) vorgesehen ist, wobei der Mitnehmer (12) mit dem Mitnehmer-Gegenstück (14) verbunden ist, **dadurch gekennzeichnet dass** der Strahlformer die als Strahlregler-Einheit (4) ausgebildet ist weiterhin einen Strahlzerleger aufweist, und dass der Mitnehmer (12) und das Mitnehmer-Gegenstück (14) die Teilstücke (5, 6) relativ zueinander verdrehbar aneinander halten.

2. Auslaufmundstück nach Anspruch 1, **dadurch gekennzeichnet, dass** die Strahlregler-Einheit (4) der Ventileinheit (3) in Strömungsrichtung vor- oder nachgeschaltet ist.

3. Auslaufmundstück nach Anspruch 1 oder 2, **dadurch gekennzeichnet, dass** die Ventileinheit (3) als Regelventil ausgestaltet ist, das ein Einregeln der durch das Regelventil (3) pro Zeiteinheit durchströmenden Flüssigkeitsmenge erlaubt.

4. Auslaufmundstück nach einem der Ansprüche 1 bis 3, **dadurch gekennzeichnet, dass** die Ventileinheit (3) zumindest zwei aneinander anliegende Ventilscheiben (7, 8) mit jeweils wenigstens einer Scheibenöffnung (9) hat und dass die Ventilscheiben (7, 8) relativ zueinander zwischen der Sperrposition, in welcher Sperrposition die Scheibenkörper der Ventilscheiben (7, 8) die wenigstens eine Scheibenöffnung (9) der jeweils benachbarten Ventilscheibe (7, 8) dichtend überdecken, und wenigstens der Offenposition verdrehbar sind, in welcher Offenposition die Scheibenöffnungen (9) der Ventilscheiben (7, 8) zumindest bereichsweise miteinander fluchten.

5. Auslaufmundstück nach Anspruch 4, **dadurch gekennzeichnet, dass** zumindest eine Ventilscheibe (7, 8) als Keramik- oder Kunststoffscheibe ausgestaltet ist.

6. Auslaufmundstück nach Anspruch 4 oder 5, **dadurch gekennzeichnet, dass** das Anschluss-Teilstück (5) und das Aufnahme-Teilstück (6) zum Verdrehen der Ventilscheiben (7, 8) relativ zueinander verdrehbar sind.

7. Auslaufmundstück nach einem der Ansprüche 4 bis 6, **dadurch gekennzeichnet, dass** das Aufnahme-Teilstück (6) verdrehbar am Anschluss-Teilstück (5) gehalten ist und dass das Aufnahme-Teilstück (6) mit zumindest einer Ventilscheibe (7, 8) in Dreh-Antriebsverbindung steht.

8. Auslaufmundstück nach einem der Ansprüche 1 bis 7, **dadurch gekennzeichnet, dass** die Bestandteile des Auslaufmundstücks im Wesentlichen aus Kunststoff hergestellt sind.

9. Auslaufmundstück nach einem der Ansprüche 1 bis 8, **dadurch gekennzeichnet, dass** die Ventileinheit (3) gegen eine Rückstellkraft von der Sperrposition in die Offenposition bewegbar ist, und dass zumindest ein Reibelement (31, 32) für eine gedämpfte beziehungsweise zeitverzögerte Rückstellbewegung oder zur zeitverzögerten Freigabe der durch die Rückstellkraft bewirkten Rückstellbewegung vorgesehen ist.

10. Auslaufmundstück nach Anspruch 9, **dadurch gekennzeichnet, dass** als Rückstellkraft zumindest ein federelastisches und/oder wenigstens ein gummielastisches Rückstellelement vorgesehen ist.

11. Auslaufmundstück nach Anspruch 9 oder 10, **dadurch gekennzeichnet, dass** das zumindest eine Rückstellelement zwischen dem Anschluss-Teilstück (5) und dem Aufnahme-Teilstück wirksam ist.

12. Auslaufmundstück nach einem der Ansprüche 9 bis 11, **dadurch gekennzeichnet, dass** zumindest ein Reibelement (32) zwischen den Ventilscheiben und/oder wenigstens ein Reibelement (31) zwischen dem Innenumfang des Anschluss-Teilstückes (5) und der mit dem Aufnahme-Teilstück (6) in Drehantriebsverbindung stehenden Ventilscheibe (8) wirksam ist.

13. Auslaufmundstück nach einem der Ansprüche 9 bis 12, **dadurch gekennzeichnet, dass** ein die Ventilscheibe (8) ringförmig umschließendes Reibelement (31) vorgesehen ist, das an seinem Innenumfang zumindest eine Auflaufschräge (34) hat, die mit einem als Gegenschräge (35) ausgebildeten Umfangs-Teilbereich der Ventilscheibe (8) derart zusammenwirkt, dass die Auflaufschräge (34) während der durch die Rückstellkraft bewirkten Rückstellbewegung auf die Gegenschräge (35) aufläuft.

14. Auslaufmundstück nach Anspruch 13, **dadurch gekennzeichnet, dass** das ringförmige Reibelement (31) infolge des Auflaufens seiner zumindest einen Auflaufschräge (34) vorzugsweise derart aufweitbar ist, dass das Reibelement (31) zunehmend an dem Innenumfang des Anschluss-Teilstückes (5) gepresst wird.

15. Auslaufmundstück nach einem der Ansprüche 9 bis 14, **dadurch gekennzeichnet, dass** als Rückstellkraft zumindest eine Druck- oder Zugfeder (39, 40) und vorzugsweise eine Schenkelfeder (39) vorgesehen ist.

## Claims

1. Outlet nozzle (1) which is fastenable to an outlet fitting or similar outlet end (2) of a sanitary water line and has a valve unit (3) which is movable between a locking position closing the water line and an open position opening up the water line, wherein the outlet nozzle (1) is configured in at least two parts and has a connecting subsection (5) fastenable to the outlet end of the water line, and an adjacent receiving subsection (6), in which receiving subsection (6) a jet former is provided which is designed as a jet regulator unit (4), which (4) has a jet regulator housing (18), in the housing interior of which a jet splitter and a flow rectifier are provided, wherein the receiving subsection (6) has a receiving cavity (17) which is open on the end side, in which receiving cavity (17) the jet regulator unit (4) is releasably insertable, and wherein an external thread (19) is provided on the outer circumferential side of the jet regulator housing (18), which external thread (19) corresponds to an internal thread (20) in the receiving subsection (6), wherein a driver (12) which is connectable to a valve disc (7, 8) of the valve unit (3) for rotation with said valve disc is provided in the connecting subsection (5) and a driver counterpart (14) is provided in the receiving subsection (6), wherein the driver (12) is connected to the driver counterpart (14), **characterized in that** the jet former which is designed as a jet regulator unit (4) furthermore has a jet splitter, and **in that** the driver (12) and the driver counterpart (14) hold the subsections (5, 6) on each other such that they are rotatable relative to each other.

2. Outlet nozzle according to Claim 1, **characterized in that** the jet regulator unit (4) is connected upstream or downstream of the valve unit (3) in the flow direction.

3. Outlet nozzle according to Claim 1 or 2, **characterized in that** the valve unit (3) is configured as a regulating valve which permits adjustment of the liquid rate flowing through the regulating valve (3) per unit of time.

4. Outlet nozzle according to one of Claims 1 to 3, **characterized in that** the valve unit (3) has at least two valve discs (7, 8) which lie against each other and each have at least one disc opening (9), and **in that** the valve discs (7, 8) are rotatable relative to each other between the blocking position, in which blocking position the disc bodies of the valve discs (7, 8) sealingly overlap the at least one disc opening (9) in the respectively adjacent valve discs (7, 8), and at least the open position, in which open position the disc openings (9) in the valve discs (7, 8) are aligned with each other at least in regions.

5. Outlet nozzle according to Claim 4, **characterized in that** at least one valve disc (7, 8) is configured as a ceramic or plastics disc.

6. Outlet nozzle according to Claim 4 or 5, **characterized in that** the connecting subsection (5) and the receiving subsection (6) are rotatable relative to each other for rotation of the valve discs (7, 8).

7. Outlet nozzle according to one of Claims 4 to 6, **characterized in that** the receiving subsection (6) is held rotatably on the connecting subsection (5), and **in that** the receiving subsection (6) is in rotational driving connection with at least one valve disc (7, 8).

8. Outlet nozzle according to one of Claims 1 to 7, **characterized in that** the component parts of the outlet nozzle are substantially produced from plastic.

9. Outlet nozzle according to one of Claims 1 to 8, **characterized in that** the valve unit (3) is movable counter to a resetting force from the blocking position into the open position, and **in that** at least one friction element (31, 32) is provided for a damped or time-delayed resetting movement or for the time-delayed release of the resetting movement brought about by the resetting force.

10. Outlet nozzle according to Claim 9, **characterized in that** at least one spring-elastic and/or at least one rubber-elastic resetting element is provided as the resetting force.

11. Outlet nozzle according to Claim 9 or 10, **characterized in that** the at least one resetting element is effective between the connecting subsection (5) and the receiving subsection.

12. Outlet nozzle according to one of Claims 9 to 11, **characterized in that** at least one friction element (32) is effective between the valve discs and/or at least one friction element (31) is effective between the inner circumference of the connecting subsection (5) and the valve disc (8) which is in rotational driving connection with the receiving subsection (6).

13. Outlet nozzle according to one of Claims 9 to 12, **characterized in that** a friction element (31) annularly surrounding the valve disc (8) is provided, which friction element has, on its inner circumference, at least one run-on slope (34) which interacts with a circumferential partial region of the valve disc (8), which circumferential partial region is designed as a counterslope (35), in such a manner that the run-on slope (34) runs onto the counterslope (35) during the resetting movement brought about by the resetting force.

14. Outlet nozzle according to Claim 13, **characterized in that** the annular friction element (31) is expandable as a result of the running-on of its at least one run-on slope (34), preferably in such a manner that the friction element (31) is increasingly pressed against the inner circumference of the connecting subsection (5).

15. Outlet nozzle according to one of Claims 9 to 14, **characterized in that** at least one compression or tension spring (39, 40) and preferably a leg spring (39) are provided as the resetting force.

## Revendications

1. Embout de sortie (1) qui peut être fixé à un robinet de sortie ou une extrémité de sortie similaire (2) d'une conduite d'eau sanitaire et qui présente une unité de vanne (3) qui peut être déplacée entre une position de blocage fermant la conduite d'eau et une position d'ouverture libérant la conduite d'eau, l'embout de sortie (1) étant configuré au moins en deux parties et présentant une pièce partielle de raccordement (5) pouvant être fixée à l'extrémité de sortie de la conduite d'eau ainsi qu'une pièce partielle de réception adjacente (6), dans laquelle pièce partielle de réception (6) est prévu un dispositif de formation de jet qui est réalisé sous forme d'unité de régulation de jet (4), laquelle (4) présente un boîtier de régulateur de jet (18) à l'intérieur duquel est prévu un séparateur de jet et un redresseur de flux, la pièce partielle de réception (6) présentant une cavité de réception ouverte du côté frontal (17), dans laquelle cavité de réception (17) peut être insérée de manière amovible l'unité de régulation de jet (4), et un filetage extérieur (19) étant prévu du côté de la périphérie extérieure sur le boîtier de régulateur de jet (18), lequel filetage extérieur (19) correspond à un filetage intérieur (20) dans la pièce partielle de réception (6), un élément d'entraînement (12) pouvant être connecté de manière solidaire en rotation avec un disque de vanne (7, 8) de l'unité de vanne (3) étant prévu dans la pièce partielle de raccordement (5) et une pièce conjuguée d'élément d'entraînement (14) étant prévue dans la pièce partielle de réception (6), l'élément d'entraînement (12) étant connecté à la pièce conjuguée d'élément d'entraînement (14), **caractérisé en ce que** le dispositif de formation de jet qui est réalisé sous forme d'unité de régulation de jet (4) présente en outre un séparateur de jet,
et **en ce que** l'élément d'entraînement (12) et la pièce conjuguée d'élément d'entraînement (14) retiennent les pièces partielles (5, 6) l'une contre l'autre de manière à ce qu'elles puissent tourner l'une par rapport à l'autre.

2. Embout de sortie selon la revendication 1, **caractérisé en ce que** l'unité de régulation de jet (4) est montée en amont ou en aval de l'unité de vanne (3) dans la direction de l'écoulement.

3. Embout de sortie selon la revendication 1 ou 2, **caractérisé en ce que** l'unité de vanne (3) est configurée sous forme de vanne de régulation, qui permet un ajustement de la quantité de liquide s'écoulant à travers la vanne de régulation (3) par unité de temps.

4. Embout de sortie selon l'une quelconque des revendications 1 à 3, **caractérisé en ce que** l'unité de vanne (3) présente au moins deux disques de vanne (7, 8) s'appliquant l'un contre l'autre, avec à chaque fois au moins une ouverture de disque (9) et **en ce que** les disques de vanne (7, 8) peuvent tourner l'un par rapport à l'autre entre la position de blocage, dans laquelle position de blocage les corps de disque des disques de vanne (7, 8) recouvrent hermétiquement l'au moins une ouverture de disque (9) de chaque disque de vanne (7, 8) respectivement adjacent, et au moins la position d'ouverture, dans laquelle position d'ouverture les ouvertures de disque (9) des disques de vanne (7, 8) sont au moins en partie alignées l'une avec l'autre.

5. Embout de sortie selon la revendication 4, **caractérisé en ce qu'**au moins un disque de vanne (7, 8) est réalisé sous forme de disque en céramique ou en plastique.

6. Embout de sortie selon la revendication 4 ou 5, **caractérisé en ce que** la pièce partielle de raccordement (5) et la pièce partielle de réception (6) peuvent tourner l'une par rapport à l'autre pour faire tourner les disques de vanne (7, 8).

7. Embout de sortie selon l'une quelconque des revendications 4 à 6, **caractérisé en ce que** la pièce partielle de réception (6) est retenue de manière à pouvoir tourner sur la pièce partielle de raccordement (5) et **en ce que** la pièce partielle de réception (6) est en liaison d'entraînement en rotation avec au moins un disque de vanne (7, 8).

8. Embout de sortie selon l'une quelconque des revendications 1 à 7, **caractérisé en ce que** les constituants de l'embout de sortie sont fabriqués essentiellement en plastique.

9. Embout de sortie selon l'une quelconque des revendications 1 à 8, **caractérisé en ce que** l'unité de vanne (3) peut être déplacée de la position de blocage dans la position d'ouverture à l'encontre d'une force de rappel, et **en ce qu'**au moins un élément de frottement (31, 32) est prévu pour un déplacement de rappel amorti ou ralenti ou pour une libération ralentie du mouvement de rappel provoqué par la force de rappel.

10. Embout de sortie selon la revendication 9, **caractérisé en ce qu'**il est prévu en tant que force de rappel au moins un élément de rappel élastique à ressort et/ou au moins un élément de rappel ayant l'élasticité du caoutchouc.

11. Embout de sortie selon la revendication 9 ou 10, **caractérisé en ce que** l'au moins un élément de rappel agit entre la pièce partielle de raccordement (5) et la pièce partielle de réception.

12. Embout de sortie selon l'une quelconque des revendications 9 à 11, **caractérisé en ce qu'**au moins un élément de frottement (32) agit entre les disques de vanne et/ou au moins un élément de frottement (31) agit entre la périphérie intérieure de la pièce partielle de raccordement (5) et le disque de vanne (8) en liaison d'entraînement en rotation avec la pièce partielle de réception (6).

13. Embout de sortie selon l'une quelconque des revendications 9 à 12, **caractérisé en ce qu'**il est prévu un élément de frottement (31) entourant sous forme annulaire le disque de vanne (8), lequel présente au niveau de sa périphérie intérieure au moins un biseau de montée (34) qui coopère avec une région partielle périphérique du disque de vanne (8) réalisée sous forme de biseau conjugué (35) de telle sorte que le biseau de montée (34), pendant le déplacement de rappel provoqué par la force de rappel, monte sur le biseau conjugué (35).

14. Embout de sortie selon la revendication 13, **caractérisé en ce qu'**un élément de frottement de forme annulaire (31), du fait de la montée de son au moins un biseau de montée (34), peut de préférence être élargi de telle sorte que l'élément de frottement (31) soit pressé de manière croissante contre la périphérie intérieure de la pièce partielle de raccordement (5).

15. Embout de sortie selon l'une quelconque des revendications 9 à 14, **caractérisé en ce que** l'on prévoit en tant que force de rappel au moins un ressort de compression ou un ressort de traction (39, 40) et de préférence un ressort à branches (39).
